# EUROPÄISCHE PATENTSCHRIFT

(11) **EP 2 289 059 B1**
(45) Veröffentlichungstag und Bekanntmachung des Hinweises auf die Patenterteilung: **09.09.2015**
(21) Anmeldenummer: 09749623.6
(22) Anmeldetag: 19.05.2009
(51) Int. Cl.: G08G 1/14, G08G 1/16, B60Q 1/48

(54) **VERFAHREN ZUM BETRIEB EINES FAHRASSISTENZSYSTEMS BEIM EINPARKEN EINES FAHRZEUGS IN EINE PARKLÜCKE**
METHOD FOR OPERATING A DRIVER ASSISTANCE SYSTEM WHEN PARKING A VEHICLE IN A PARKING SPACE
PROCÉDÉ POUR FAIRE FONCTIONNER UN SYSTÈME D'AIDE À LA CONDUITE LORS DE LA RÉALISATION D'UN CRÉNEAU

(30) Priorität: 23.05.2008 DE 102008024964
(43) Veröffentlichungstag der Anmeldung: 02.03.2011
(73) Patentinhaber: Valeo Schalter Und Sensoren Gmbh, 74321 Bietiheim-Bissingen (DE)
(72) Erfinder: BAMMERT, Jens, 70178 Stuttgart (DE); HOFFSOMMER, Klaus, 74321 Bietigheim-Bissingen (DE); KOSSMANN, Simon, 71287 Weissach (DE); VOVKUSHEVSKY, Vsevolod, 74321 Bietigheim-Bissingen (DE)
(86) Internationale Anmeldenummer: PCT/EP2009/003589
(87) Internationale Veröffentlichungsnummer: WO 2009/141133

(56) Entgegenhaltungen:
- EP-A- 1 028 026
- EP-A- 1 887 540
- WO-A-2004/053812
- DE-A1-102005 032 096
- US-A1- 2007 252 723

## Beschreibung

### Stand der Technik

Die Erfindung ist im Bereich der Nahbereichserkennung bzw. im Bereich der Umfelderfassung von Fahrzeugen angesiedelt. Insbesondere betrifft die Erfindung ein Verfahren zum Betrieb eines Fahrassistenzsystems beim Einparken eines Fahrzeugs in eine Parklücke gemäß dem Oberbegriff des Anspruchs 1, eine Fahrassistenzvorrichtung gemäß dem Oberbegriff des Anspruchs 9 sowie ein Computerprogrammprodukt gemäß dem Oberbegriff des Anspruchs 11.

Bekannte Fahrassistenzvorrichtungen zur Unterstützung eines Fahrers eines Fahrzeugs beim Einparken, im Folgenden kurz als Einparksysteme bezeichnet, helfen dem Fahrer aktiv in eine seitlich längs der Fahrbahn liegende Parklücke einzuparken. Dabei vermißt das Einparksystem mit beispielsweise seitlich am Fahrzeug angebrachten Sensoren, beispielsweise Ultraschallsensoren (Ultrasonic Park Assist Sensoren; UPA-Sensoren), eine mögliche Parklücke, berechnet aus den Lückendaten eine Einparktrajektorie und steuert das Fahrzeug beispielsweise durch aktiven Lenkeingriff oder durch Fahranweisungen an den Fahrer in die Parklücke. Während des Einparkvorgangs bzw. beim Einparken wird die Distanz zu die Parklücke begrenzenden Objekten durch die Ultraschallsensoren überwacht.

Damit eine gewünschte Vermessungsgenauigkeit nicht unterschritten wird, darf für die Vermessungsdauer einer Parklücke bzw. während der Parkplatzsuche bei der Vorbeifahrt an längs der Fahrbahn abgestellten Fahrzeugen eine bestimmte Maximalgeschwindigkeit bei der Vermessung nicht überschritten werden. Diese Maximalgeschwindigkeit liegt zumeist unterhalb einer erlaubten Höchstgeschwindigkeit auf Ausfallstraßen bzw. Hauptstraßen. Dadurch besteht die Gefahr, dass hinter einem Fahrzeug, welches auf der Suche nach einem Parkplatz ist, fahrende Fahrzeuge sehr nah auffahren und bei plötzlichen Bremsmanövern des vorderen Fahrzeugs überrascht werden und nicht rechtzeitig bremsen können.

Aus der DE 10 2005 032 096 A1 ist ein Verfahren zur Unterstützung eines Fahrers eines Kraftfahrzeugs bei der Erkennung von geeigneten Parklücken bekannt, bei dem potentielle Parklücken bei einer Vorbeifahrt des Fahrzeugs mittels einer Messeinrichtung erfasst und dahingehend bewertet werden, ob ein Einparkvorgang möglich ist. Bei Erkennen einer geeigneten Parklücke erhält der Fahrer einen Hinweis und das Fahrzeug wird automatisch abgebremst. Um beim Abbremsen Auffahrunfälle zu vermeiden, werden über Umfeldsensoren die Abstände zu nachfolgenden und/oder vorausfahrenden Fahrzeugen überwacht und die Stärke der Abbremsung an die ermittelten Abstände angepasst.

Als eine Aufgabe der Erfindung kann es deshalb angesehen werden, ein Verfahren zu entwickeln, durch welches Auffahrunfälle während der Parkplatzsuche vermieden werden können.

### Offenbarung der Erfindung

Die Aufgabe wird erfindungsgemäß gelöst durch ein Verfahren zum Betrieb eines Fahrassistenzsystems beim Einparken eines Fahrzeugs in eine seitliche Parklücke längs zu einer Fahrbahn, bei welchem Verfahren während der Parklückensuche unterhalb einer bestimmten Aktivierungsgeschwindigkeit mögliche Parklücken vermessen werden und bei einer für das Fahrzeug ausreichend langen Parklücke eine auf eine geeignete bzw. gültige gefundene Parklücke hinweisende Information an den Fahrer des Fahrzeugs ausgegeben wird. Erfindungsgemäß ist dabei vorgesehen, dass der Heckbereich des Fahrzeugs bei Unterschreitung der Aktivierungsgeschwindigkeit während der Parklückensuche überwacht und der Fahrer des Fahrzeugs bei einem beispielsweise sich nähernden oder sich im Heckbereich befindenden nachfolgenden Fahrzeug vor potentiellen Auffahrunfällen durch plötzliche Bremsmanöver gewarnt wird.

Wird dem Fahrer des Fahrzeugs eine geeignete Parklücke gemeldet und der Bereich hinter dem Fahrzeug ist frei, kann der Fahrer des Fahrzeugs unverzüglich ein Bremsmanöver mit einer gewünschten Verzögerung durchführen. Wird jedoch eine geeignete Parklücke gefunden und der Bereich hinter dem Fahrzeug ist nicht frei, wird der Fahrer des Fahrzeugs rechtzeitig vor einem plötzlichen Bremsmanöver gewarnt, sodass er das Bremsmanöver nur vorsichtig einleitet.

Vorteile der Erfindung ergeben sich insbesondere dadurch, dass sich dadurch die Gefahr von Auffahrunfällen durch plötzliche Bremsmanöver verringert, während ein Einparkassistent bzw. ein Einparksystem aktiv ist.

Eine vorteilhafte Ausgestaltung des erfindungsgemäßen Verfahrens sieht vor, dass wenn potentielle Auffahrfahrzeuge bzw. ein beispielsweise sich näherndes oder sich im Heckbereich befindendes nachfolgendes Fahrzeug hinter dem Fahrzeug erkannt wird, bei Unterschreitung der Aktivierungsgeschwindigkeit während der Parklückensuche dem Fahrer eine geeignete Parklücke unter gleichzeitiger Warnung vor einem potentiellen Auffahrunfall durch ein plötzliches Bremsmanöver gemeldet wird. Der Fahrer des Fahrzeugs muss entsprechend auf die Warnung reagieren und kann ein erforderliches Bremsmanöver nicht uneingeschränkt durchführen.

Eine andere vorteilhafte Ausgestaltung des erfindungsgemäßen Verfahrens sieht vor, dass bei einer erkannten Kollisionsgefahr durch ein nachfolgendes oder sich im Heckbereich befindendes Fahrzeug bzw. wenn potentielle Auffahrfahrzeuge bzw. ein beispielsweise sich näherndes oder sich im Heckbereich befindendes nachfolgendes Fahrzeug hinter dem Fahrzeug erkannt wird, schon vor einer Meldung einer geeigneten Parklücke das nachfolgende bzw. hinterher fahrende Fahrzeug über ein mögliches bevorstehendes Bremsmanöver informiert wird.

Dabei ist denkbar, dass die Information über ein mögliches bevorstehendes Bremsmanöver durch Aktivierung der Bremslichter des Fahrzeugs sofort nach dem Erkennen einer geeigneten Parklücke erfolgt, ohne dass eine Bremsverzögerung auftritt. Die Bremsverzögerung erfolgt vorzugsweise erst dann, wenn der Fahrer des Fahrzeugs, welches auf der Suche nach einer Parklücke ist, das Bremsmanöver einleitet.

Ebenfalls ist denkbar, dass die Information über ein mögliches bevorstehendes Bremsmanöver über eine Fahrzeug-zu-Fahrzeug-Kommunikation zum nachfolgenden Fahrzeug erfolgt.

Eine besonders vorteilhafte Ausgestaltung des erfindungsgemäßen Verfahrens ist gekennzeichnet durch Verwendung unterschiedlicher Darstellungen für gefundene Parklücken, wenn der Heckbereich frei ist, und wenn er nicht frei ist.

Die Erfindung bzw. das erfindungsgemäße Verfahren ist insbesondere in Verbindung mit einer Fahrassistenzvorrichtung zur Unterstützung eines Fahrers eines Fahrzeuges beim Einparken in eine seitliche Parklücke längs zu einer Fahrbahn vorteilhaft anwendbar.

Eine solche Fahrassistenzvorrichtung umfasst vorzugsweise Mittel zur Vermessung und Erfassung von seitlichen Parklücken längs einer Fahrbahn, sowie zur Erfassung von nachfolgenden Fahrzeugen in einem Heckbereich des Fahrzeugs, sowie einen mit den Mitteln verbundenen Mikroprozessor mit zugehörigen Speichermitteln zur Berechnung, ob eine vermessene und erfasste Parklücke für das Fahrzeug geeignet ist, und ob durch ein plötzliches Bremsmanöver bei einem beispielsweise sich nähernden oder sich im Heckbereich befindenden nachfolgenden Fahrzeug ein potentieller Auffahrunfall droht, sowie Mittel zur Information des Fahrers des Fahrzeugs über eine geeignete Parklücke sowie gegebenenfalls vor einem potentiellen Auffahrunfall bei einem plötzlichen Bremsmanöver.

Eine vorteilhafte Anwendung des erfindungsgemäßen Verfahrens ergibt sich in Verbindung mit einer Fahrassistenzvorrichtung, welche ein geführtes Einparken oder ein halbautomatisches Einparken, oder ein vollautomatisches Einparken ermöglicht.

Eine besonders vorteilhafte Ausgestaltung der Erfindung betrifft ein Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines oben beschriebenen, erfindungsgemäßen Verfahrens veranlassen.

### Kurze Beschreibung der Zeichnung

Die Erfindung wird nachfolgend anhand der Figuren der Zeichnung erläutert. Dabei zeigen:
- Fig. 1: Eine schematische Darstellung einer ersten Situation während der Parklückensuche unterhalb einer bestimmten Aktivierungsgeschwindigkeit, bei der ein überwachter Heckbereich frei ist.
- Fig. 2: Eine schematische Darstellung einer zweiten Situation während der Parklückensuche unterhalb einer bestimmten Aktivierungsgeschwindigkeit, bei der ein überwachter Heckbereich nicht frei ist.

### Ausführungsform der Erfindung

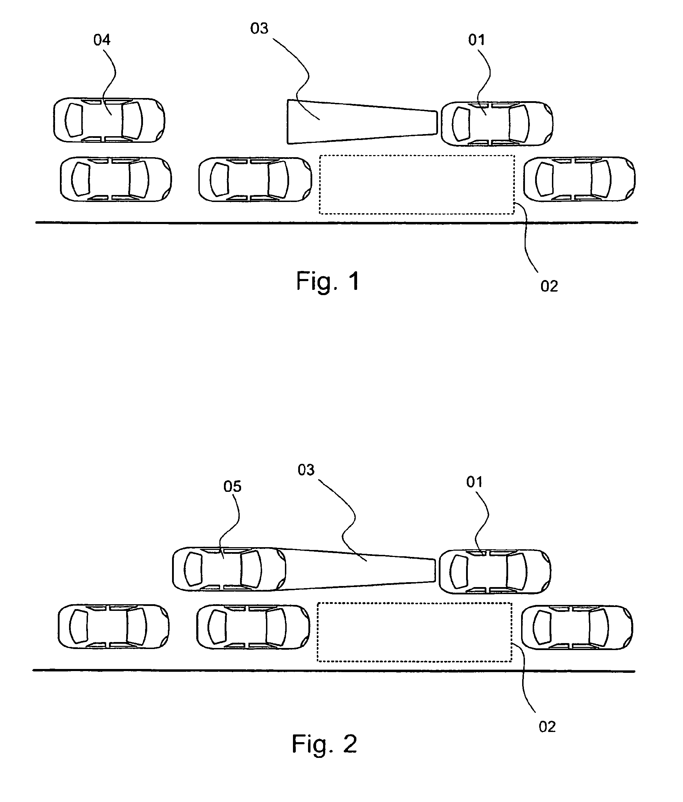

Unterschreitet ein in den Fig. 1 und 2 dargestelltes Fahrzeug 01 eine Aktivierungsgeschwindigkeit einer Sensorik zur Vermessung des Fahrzeugumfeldes, so wird die Umfelderfassung aktiviert. Aktiviert der Fahrer des Fahrzeugs 01 daraufhin den Einparkassistenten bzw. das Einparksystem des Fahrzeugs 01, wird der Fahrer über gültige Parklücken 02, d.h. über für das Fahrzeug 01 ausreichend lange Parklücken 02 informiert. Gleichzeitig wird eine Überwachung eines Bereichs 03 hinter dem Fahrzeug 01 aktiviert.

Wird dem Fahrer des Fahrzeugs 01 eine gültige Parklücke 02 gemeldet und der Bereich 03 hinter dem Fahrzeug 01 ist frei, kann der Fahrer des Fahrzeugs 01 unverzüglich ein Bremsmanöver mit einer gewünschten Verzögerung durchführen (Fig. 1). Wird dem Fahrer des Fahrzeugs 01 jedoch eine gültige Parklücke 02 gemeldet und der Bereich 03 hinter dem Fahrzeug 01 ist nicht frei, wird der Fahrer des Fahrzeugs 01 rechtzeitig vor einem plötzlichen Bremsmanöver gewarnt, sodass er das Bremsmanöver nur vorsichtig einleitet.

Vorteile der Erfindung ergeben sich insbesondere dadurch, dass sich dadurch die Gefahr von Auffahrunfällen durch plötzliche Bremsmanöver verringert, während ein Einparkassistent bzw. ein Einparksystem aktiv ist.

Fig. 1 zeigt eine Situation, bei der der Heckbereich 03 des Fahrzeugs 01, welches auf der Suche nach einer Parklücke 02 ist, frei ist, d.h. eine Situation, bei der ein dem Fahrzeug 01 nachfolgendes Fahrzeug 04 entweder außerhalb der Reichweite einer entsprechenden den Heckbereich 03 des Fahrzeugs 01 überwachenden Sensorik ist, oder einen ausreichend großen Abstand zum Fahrzeug 01 aufweist. In der in Fig. 1 dargestellten Situation ist ein Einparkassistent bzw. ein Einparksystem aktiviert. Hierdurch sind die Parklückenvermessung und die Hecküberwachung aktiv. Die Geschwindigkeit des Fahrzeugs 01 liegt dabei unterhalb der erlaubten Höchstgeschwindigkeit.

Erkennt das Einparksystem hinter dem Fahrzeug 01 keine potentiellen Auffahrfahrzeuge, meldet das Einparksystem jede gültige Parklücke 02 und der Fahrer des Fahrzeugs 01 kann ein erforderliches Bremsmanöver uneingeschränkt durchführen.

Fig. 2 zeigt eine Situation, bei der der Heckbereich 03 des Fahrzeugs 01, welches auf der Suche nach einer Parklücke 02 ist, nicht frei ist, d.h. eine Situation, bei der ein dem Fahrzeug 01 nachfolgendes Fahrzeug 04 entweder innerhalb der Reichweite einer entsprechenden den Heckbereich 03 des Fahrzeugs 01 überwachenden Sensorik ist, oder einen Mindestabstand zum Fahrzeug 01 unterschreitet. In der in Fig. 1 dargestellten Situation ist ein Einparkassistent bzw. ein Einparksystem aktiviert. Hierdurch sind die Parklückenvermessung und die Hecküberwachung aktiv. Die Geschwindigkeit des Fahrzeugs 01 liegt unterhalb der erlaubten Höchstgeschwindigkeit.

Erkennt das Einparksystem hinter dem Fahrzeug 01 ein potentielles Auffahrfahrzeug 05, meldet das Einparksystem eine gültige Parklücke 02 und warnt den Fahrer des Fahrzeugs 01 zugleich vor einem zu plötzlichen Bremsmanöver. Der Fahrer des Fahrzeugs 01 muss entsprechend auf die Warnung reagieren und kann ein erforderliches Bremsmanöver nicht uneingeschränkt durchführen.

Grundsätzlich ist denkbar, dass eine Fahrassistenzvorrichtung bzw. ein Einparksystem, welches während der Parkplatzsuche das erfindungsgemäße Verfahren ausführt, bei einer erkannten Kollisionsgefahr durch ein nachfolgendes Fahrzeug 05 schon vor einer Meldung einer gültigen Parklücke 02 das hinterher fahrende Fahrzeug 05 über ein bevorstehendes Bremsmanöver informieren, beispielsweise indem Bremslichter sofort nach dem Erkennen einer gültigen Parklücke 02 vom Einparksystem aktiviert werden, jedoch ohne dass eine Bremsverzögerung auftritt. Die Bremsverzögerung erfolgt erst dann, wenn der Fahrer des Fahrzeugs 01, welches auf der Suche nach einer Parklücke 02 ist, das Bremsmanöver einleitet.

Ebenfalls ist denkbar, dass das Einparksystem über eine Fahrzeug-zu-Fahrzeug-Kommunikation ein hinterherfahrendes Fahrzeug 04, 05 über den Status, dass der Einparkassistent bzw. das Einparksystem aktiv ist, informieren, sodass der Fahrer eines nachfolgenden Fahrzeugs 04, 05 über mögliche Bremsmanöver informiert oder zumindest vorgewarnt ist.

Außerdem ist denkbar, dass das Einparksystem die gültige Parklücke 02 nicht meldet, wenn der Heckbereich 03 des Fahrzeugs 01 nicht frei ist.

Darüber hinaus ist denkbar, unterschiedliche Darstellungen für gefundene Parklücken 02 zu verwenden, wenn der Heckbereich 03 frei ist, und wenn er nicht frei ist.

Als Vorrichtung zur Überwachung des Heckbereichs (03) des Fahrzeugs (01) kann z. B. eine Anordnung von Ultraschallsensoren vorgesehen sein, als Bestandteil einer ohnehin vorhandenen Einparkhilfe an einem Heckstoßfänger des Fahrzeugs (01) angeordnet sind. Derartige Sensoren werden üblicherweise erst bei Einlegen eines Rückwärtsgangs des Fahrzeugs (01) aktiviert. Bei dem erfindungsgemäßen Verfahren ist nun vorgesehen, dass diese Sensoren bereits bei Einschalten der Parklückenvermessung aktiviert werden können.

Des Weiteren können zur Überwachung des Heckbereichs (03) auch Radarsensoren einer Blind-Spot Überwachungseinrichtung des Fahrzeugs (01) vorgesehen sein. Diese Radarsensoren sind jeweils an der Seitenwand des Fahrzeugs, insbesondere in einem Eckbereich des Heckstoßfängers angeordnet und weisen einen Überwachungsbereich auf, der zumindest einen seitlichen Bereich hinter dem Heckbereich (03) des Fahrzeugs (01) umfasst.

## Patentansprüche

1. Verfahren zum Betrieb eines Fahrassistenzsystems beim Einparken eines Fahrzeugs (01) in eine seitliche Parklücke (02) längs zu einer Fahrbahn, bei dem unterhalb einer bestimmten Aktivierungsgeschwindigkeit und während der Parklückensuche mögliche Parklücken (02) vermessen werden und bei einer für das Fahrzeug (01) ausreichend langen Parklücke (02) eine auf eine geeignete gefundene Parklücke (02) hinweisende Information an den Fahrer ausgegeben wird, wobei der Heckbereich (03) des Fahrzeugs (01) bei aktiviertem Einparkassistenten überwacht wird, **dadurch gekennzeichnet, dass** der Fahrer des Fahrzeugs (01) bei einem sich im Heckbereich (03) befindenden nachfolgenden Fahrzeug (05) vor einem potentiellen Auffahrunfall durch ein plötzliches Bremsmanöver gewarnt wird, und dass wenn ein nachfolgendes Fahrzeug (05) hinter dem Fahrzeug (01) erkannt wird, schon vor einer Meldung einer geeigneten Parklücke (02) das nachfolgende Fahrzeug (05) über ein mögliches bevorstehendes Bremsmanöver informiert wird.

2. Verfahren nach Anspruch 1, **dadurch gekennzeichnet, dass** wenn ein nachfolgendes Fahrzeug (05) hinter dem Fahrzeug (01) erkannt wird, dem Fahrer eine geeignete Parklücke (02) unter gleichzeitiger Warnung vor einem potentiellen Auffahrunfall durch ein plötzliches Bremsmanöver gemeldet wird.

3. Verfahren nach Anspruch 1, **dadurch gekennzeichnet, dass** die Information über ein mögliches bevorstehendes Bremsmanöver durch Aktivierung der Bremslichter des Fahrzeugs (01) sofort nach dem Erkennen einer geeigneten Parklücke (02) erfolgt.

4. Verfahren nach Anspruch 1, **dadurch gekennzeichnet, dass** die Information über ein mögliches bevorstehendes Bremsmanöver über eine Fahrzeug-zu-Fahrzeug-Kommunikation zum nachfolgenden Fahrzeug (05) erfolgt.

5. Verfahren nach einem der Ansprüche 1 bis 4, **gekennzeichnet durch** Verwendung unterschiedlicher Darstellungen für gefundene Parklücken (02), wenn der Heckbereich (03) frei ist, und wenn er nicht frei ist.

6. Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines Verfahrens nach einem der Ansprüche 1 bis 5 veranlassen.

## Claims

1. Method for the operation of a driving assistance system when parking a vehicle (01) in a lateral parking space (02) along a carriageway, in which below a particular activation speed and during the search for a parking space, possible parking spaces (02) are measured and an information item indicating that a suitable parking space (02) has been found is output to the driver for a parking space (02) of sufficient length for the vehicle (01), wherein the rear area (03) of the vehicle (01) is monitored when the parking assistant is activated, **characterized in that** the driver of the vehicle (01) is warned of a potential shunt accident as a result of a sudden braking maneuver when there is a following vehicle (05) in the rear area (03), and **in that** if a following vehicle (05) is identified behind the vehicle (01), the following vehicle (05) is informed about a possible imminent braking maneuver before a suitable parking space (02) is actually reported.

2. Method according to Claim 1, **characterized in that** if a following vehicle (05) is identified behind the vehicle (01), a suitable parking space (02) is reported to the driver with simultaneous warning of a potential shunt accident as a result of a sudden braking maneuver.

3. Method according to Claim 1, **characterized in that** the information about a possible imminent braking maneuver is provided by means of activation of the brake lights of the vehicle (01) immediately after a suitable parking space (02) has been identified.

4. Method according to Claim 1, **characterized in that** the information about a possible imminent braking maneuver is provided by means of vehicle-to-vehicle communication to the following vehicle (05).

5. Method according to one of Claims 1 to 4, **characterized by** the use of different presentations for parking spaces (02) which have been found when the rear area (03) is clear and when it is not clear.

6. Computer program product stored on a computer-usable medium, comprising computer-readable program means which, when the computer program product is executed on a microprocessor having associated memory means or on a computer, prompt said microprocessor or computer to carry out a method according to one of Claims 1 to 5.

## Revendications

1. Procédé de conduite d'un système d'assistance à la conduite lors d'une manoeuvre de stationnement d'un véhicule (01) en un emplacement de stationnement (02) situé sur le côté d'une voie de circulation,
dans lequel les emplacements de stationnement (02) possibles sont mesurés en dessous d'une vitesse définie d'activation pendant la recherche d'un emplacement de stationnement, et au cas où un emplacement de stationnement (02) est suffisamment long pour le véhicule (01), une information qui indique qu'un emplacement de stationnement (02) approprié a été découvert est délivrée au conducteur,
la zone (03) située à l'arrière du véhicule (01) étant surveillée lorsque l'assistance au stationnement est activée,
**caractérisé en ce que**
le conducteur du véhicule (01) est averti d'une collision possible lors d'une manoeuvre brusque de freinage lorsqu'un véhicule suivant (05) se trouve dans la zone arrière (03) et
**en ce que** si un véhicule suivant (05) est détecté derrière le véhicule (01), le véhicule suivant (05) est informé avant l'indication de la présence d'un emplacement de stationnement (02) approprié qu'une manoeuvre de freinage imminente est possible.

2. Procédé selon la revendication 1, **caractérisé en ce que** si un véhicule suivant (05) est détecté à l'arrière du véhicule (01), le conducteur est informé de la présence d'un emplacement de stationnement (02) approprié et en même temps averti du risque de collision par une manoeuvre de freinage brusque.

3. Procédé selon la revendication 1, **caractérisé en ce que** l'information qu'une manoeuvre de freinage imminente est possible est transmise par activation des feux stop du véhicule (01) dès qu'un emplacement de stationnement (02) approprié a été détecté.

4. Procédé selon la revendication 1, **caractérisé en ce que** l'information qu'une manoeuvre de freinage imminente est possible est transmise par une information véhicule-véhicule avec le véhicule suivant (05).

5. Procédé selon l'une des revendications 1 à 4, **caractérisé par** l'utilisation de présentations différentes des emplacements de stationnement (02) découverts selon que la zone arrière (03) est libre ou n'est pas libre.

6. Produit de programme informatique conservé en mémoire sur un support utilisable par ordinateur et comprenant des moyens de programme lisibles par ordinateur qui, lorsque le produit de programme informatique est exécuté sur un microprocesseur doté de moyens de mémoire associés ou sur un ordinateur, permettent à ces derniers de mettre en oeuvre un procédé selon l'une des revendications 1 à 5.
